# EUROPÄISCHE PATENTSCHRIFT

(11) **EP 3 196 394 B1**
(45) Veröffentlichungstag und Bekanntmachung des Hinweises auf die Patenterteilung: **17.04.2019**
(21) Anmeldenummer: 17151601.6
(22) Anmeldetag: 16.01.2017
(51) Int. Cl.: E05G 1/00, E05B 49/00, B60R 7/04, B60R 7/06

(54) **AUFBEWAHRUNGSEINRICHTUNG**
STORAGE DEVICE
DISPOSITIF DE RANGEMENT

(30) Priorität: 22.01.2016 DE 202016100303 U
(43) Veröffentlichungstag der Anmeldung: 26.07.2017
(73) Patentinhaber: Minda KTSN Plastic Solution GmbH & Co. KG, 01796 Pirna (DE)
(72) Erfinder: Kaushal, Anuj, 01309 Dresden (DE); Nake, Robert, 01159 Dresden (DE)
(74) Vertreter: Lins, Martina

(56) Entgegenhaltungen:
- EP-A1- 1 681 205
- DE-C1- 19 734 799
- DE-U1- 29 519 988
- US-A- 2 301 730
- US-A- 2 798 445
- US-A1- 2013 057 012

## Beschreibung

Die Erfindung betrifft eine Aufbewahrungseinrichtung in einem Fahrzeug mit einem Gehäuse, das einen Aufnahmeraum ausbildet, und eine Verschlusseinrichtung, mit der der Zugang zu dem Aufnahmeraum versperrbar ist, wobei die Verschlusseinrichtung an der Aufbewahrungseinrichtung verlagerbar gelagert ist.

Aufbewahrungseinrichtungen in Kraftfahrzeugen sind in dem Instrumentenpanel, in der Mittelkonsole und/oder in Seitenverkleidungen eines Fahrzeuges angeordnet. Die darin oder daran ausgebildeten Aufnahmeräume können durch Klappen oder Schieber verschlossen werden, so dass der darin aufgenommene Inhalt nicht sichtbar und ggf. bei einer verschließbaren Ausgestaltung der Verschlusseinrichtung gegen unbefugtes Entnehmen geschützt ist. Bei geschlossenen Kraftfahrzeugen sind solche Aufbewahrungseinrichtungen häufig ohne einen Schließzylinder versehen, was die Sicherheit gegen ein unbefugtes Entnehmen der darin befindlichen Gegenstände reduziert. Insbesondere bei Fahrzeugen mit einem abnehmbaren oder entfernbaren Verdeck kann beispielsweise ein geschlossenes Handschuhfach oder eine geschlossene Mittelkonsole einfach gewaltsam werden. Darüber hinaus besteht Bedarf an einem zusätzlichen Schutz gegen einen Einbruch auch bei höherpreisigen Fahrzeugen.

Die DE 197 34 799 C1 betrifft einen Wertbehälter für Fahrzeuge mit mehreren Fächern und einer Schalteinrichtung. Über eine elektronische Schalteinrichtung können unterschiedliche Zugänge mit unterschiedlichen Kodierungen zu einem Wertbehälter zur Aufbewahrung von persönlichen Gegenständen und gegen eine Manipulation zu schützenden Einrichtung zugänglich gemacht werden. Die DE 29519 988 U1 betrifft einen Autosafe mit einem abschließbaren, robusten Gehäuse, das mit dem Kraftfahrzeug verbunden ist und sich nur entfernen lässt, wenn das Kraftfahrzeug nicht verschlossen ist. In einem Kofferraum eines Kraftfahrzeuges ist ein abschließbares Gehäuse angeordnet ist.

Die US 2013/057012 A1 betrifft einen Aufbewahrungsraum in einem Instrumentenpanel, in dem ein Schieber angeordnet ist. Der Schieber weist eine Vorderwand mit einem Griff auf, sodass der Schieber herausgezogen und darin befindliche Gegenstände wie Schlüssel, Brieftasche oder Regenschirm entnommen werden können. Ein unbefugtes Herausziehen des Schiebers wird durch die Anordnung an der Seitenkante des Panels und eine Blockade durch eine geschlossene Fahrzeugtür verhindert.

Die EP 1 681 205 A1 betrifft ein Handschuhfach wie in einem Kraftfahrzeug mit einem darin angeordneten CD-Wechsler, der schwenkbar an der Rückwand des Handschuhfaches angeordnet ist. Über einen Verriegelungsmechanismus wird der CD-Wechsler in einer angehobenen Stellung gehalten.

Aufgabe der vorliegenden Erfindung ist es, eine Einrichtung bereit zu stellen, mit der ein verbesserter Schutz für in einem Fahrzeug befindliche Gegenstände gewährleistet werden kann.

Erfindungsgemäß wird diese Aufgabe durch eine Aufbewahrungseinrichtung mit den Merkmalen des Hauptanspruches gelöst. Vorteilhafte Ausgestaltungen und Weiterbildungen der Erfindung sind in den Unteransprüchen, der Beschreibung sowie den Figuren offenbart.

Die erfindungsgemäße Aufbewahrungseinrichtung in einem Fahrzeug mit einem Gehäuse, das ein Aufnahmeraum ausbildet, und eine Verschlusseinrichtung, mit der der Zugang zu dem Aufnahmeraum versperrbar ist, wobei die Verschlusseinrichtung an der Aufbewahrungseinrichtung verlagerbar gelagert ist, sieht vor, dass ein verschließbarer Behälter in der Aufbewahrungseinrichtung angeordnet ist, der eine Befestigungseinrichtung zur Festlegung des Behälters an einem Strukturbauteil des Fahrzeuges aufweist, wobei der Zugang zu dem Behälter durch die Verschlusseinrichtung zumindest teilweise verschließbar und der Behälter in einem Handschuhfach angeordnet und an einem Querträger als Strukturbauteil festgelegt ist ist. Als Aufbewahrungseinrichtung in Sinne der vorliegenden Erfindung gehört alles, was auf der dem Fahrzeuginsassen abgewandten Seite der Verschlusseinrichtung befindlich ist. Der verschließbare Behälter ist sicher an einem Strukturbauteil eines Fahrzeuges festgelegt, also nicht nur an einer Innenausstattung oder an einem Grundkörper einer Mittelkonsole, sondern an einem Strukturbauteil wie einem Querträger oder einer Halterung an einem Querträger, einer fest mit der Karosserie verbundenen Halterung oder einem Rahmen innerhalb einer Tür oder eines anderen Fahrzeugbauteils. Durch die Anordnung eines zusätzlich verschließbaren Behälters innerhalb der Aufbewahrungseinrichtung ist es möglich, einen zusätzlichen Schutz für innerhalb des Behälters befindliche Gegenstände bereit zu stellen. Der Zugang zu dem Behälter wird durch die Verschlusseinrichtung zumindest teilweise verschlossen oder abgedeckt, so dass das Vorhandensein des Behälters nicht oder nicht auf den ersten Blick offensichtlich ist. Dadurch wird ein zusätzlicher Sicherheitsaspekt bedient und der Behälter nicht nur durch eine an ihm gelagerte Tür oder Klappe, sondern auch durch die Verschlusseinrichtung gesichert und der Zugang zu seinem Innenraum versperrt oder behindert.

Eine Weiterbildung der Erfindung sieht vor, dass die Befestigungseinrichtung, mit der der Behälter an dem Strukturbauteil des Fahrzeuges festgelegt ist, nur über den Innenraum des Behälters zugänglich ist, was bedeutet, dass zur Entfernung des gesamten Behälters dieser zunächst geöffnet werden muss, was in der Regel nur durch massive Gewaltanwendung möglich ist. Der Behälter selbst ist in der Regel verschlossen oder verschließbar und weist einen hohen Widerstand gegen mechanische Belastungen auf. Der Behälter ist bevorzugt als ein so genannter Safe ausgebildet, der entsprechend mechanisch stabil ausgestattet ist, so dass ein Entfernen aus dem Fahrzeug aufgrund der nur über den Innenraum des Behälters zugänglichen Befestigung, beispielsweise über eine Schraubverbindung oder Nietverbindung, nicht ohne einen erheblichen Aufwand an Gerätschaft oder mechanischer Gewalt erfolgen kann.

Der Behälter kann mit zumindest einem elektrischen Anschluss versehen sein und ist im eingebauten Zustand im Fahrzeug mit einem korrespondierenden elektrischen Anschluss an die Energieversorgung gekoppelt, um zusätzliche Sicherheitseinrichtungen an oder in dem Behälter mit Energie zu versorgen, beispielsweise ein elektrisches oder elektronisches Schloss oder andere elektrisch aktivierbare Sperreinrichtungen.

Der Behälter ist über eine verschließbare Klappe oder einen verschließbaren Schieber verschließbar beziehungsweise zugänglich, der Schieber oder die Klappe können mit dem elektrisch abschließbaren Schloss gesichert sein.

Um auf Schlüssel oder sonstige separate mechanische Öffnungseinrichtungen zu verzichten oder verzichten zu können, kann auf der Klappe und auf dem Schieber ein Eingabefeld angeordnet sein, um über eine numerische oder alphanumerische Tastenkombination einen Sicherheitscode einzugeben, über den die Klappe beziehungsweise Schieber entriegelt wird und zu öffnen ist.

Die Verschlusseinrichtung ist bevorzugt so angeordnet, dass der Behälter nur bei geöffneter Verschlusseinrichtung geöffnet werden kann, bevorzugt nur bei vollständig geführter Verschlusseinrichtung, also dass der Schieber oder die Klappe durch die Verschlusseinrichtung mechanisch gesperrt wird. Zusätzlich oder alternativ zu der mechanischen Sperrung durch die Verschlusseinrichtung kann eine elektronische Sicherung eingebaut sein, die ein Öffnen des Behälters nur dann erlaubt, wenn ein Kontakt geöffnet beziehungsweise geschlossen wird. Ebenso ist es möglich, dass es nur bei bestimmten Sensorsignalen, die eine geöffnete Verschlusseinrichtung oder eine vollständige unzerstörte Verschlusseinrichtung signalisieren, die Zugänglichkeit zu dem Behälter ermöglicht wird, also die Behältertür sich öffnen lässt.

Die Verschlusseinrichtung selbst kann ein Schloss und/oder einen elektrischen Aktuator aufweisen, über den das Schloss entweder aktiviert und deaktiviert beziehungsweise eine Verschlusseinrichtung oder eine Verriegelung betätigt wird.

Der Innenraum des Behälters und/oder des Gehäuses kann beflockt sein, um die darin befindlichen Gegenstände gegen eine Beschädigung schützen oder um Störgeräusche durch klappende Gegenstände innerhalb des Aufnahmeraumes oder des Innenraumes des Behälters zu vermeiden.

Der Behälter kann vollständig in dem Aufnahmeraum, der durch die Verschlusseinrichtung abgedeckt oder verschlossen wird, angeordnet sein. Ebenfalls ist es möglich, dass der Behälter nur teilweise hinter der Verschlusseinrichtung angeordnet ist, um beispielsweise nicht entfernbare oder bewegbare Teile des Behälters hinter einer Innenverkleidung, im Instrumentenpanel oder einem Strukturbauteil anordnen zu können. Die Anordnung des Behälters in dem Aufnahmeraum kann auch so erfolgen, dass innerhalb des Aufnahmeraums ein separates Abteil oder eine Abtrennung vorhanden ist, in dem oder in der der Behälter aufgenommen wird. Der Aufnahmeraum kann sowohl relativ zu dem Strukturbauteil bewegliche als auch unbewegliche Komponenten aufweisen, beispielsweise können Ablagefächer an der Rückseite der Verschlusseinrichtung angeordnet und verschwenkbar oder verschiebbar zusammen mit der Verschlusseinrichtung an der Aufbewahrungseinrichtung gelagert sein.

Nachfolgend wird ein Ausführungsbeispiel der Erfindung genannt der die beigefügten Figuren näher erläutert. Es zeigen:
- Figur 1: - eine Schnittansicht durch ein Instrumentenpanel mit einer Aufbewahrungseinrichtung;
- Figur 2: - eine geöffnete Darstellung der Aufbewahrungseinrichtung gemäß Figur 1;
- Figur 3: - eine Darstellung gemäß Figur 2 mit einem geöffneten Behälter;
- Figur 4: - eine Frontalansicht der Stellung gemäß Figur 2;
- Figur 5: - eine Detailansicht des Behälters.

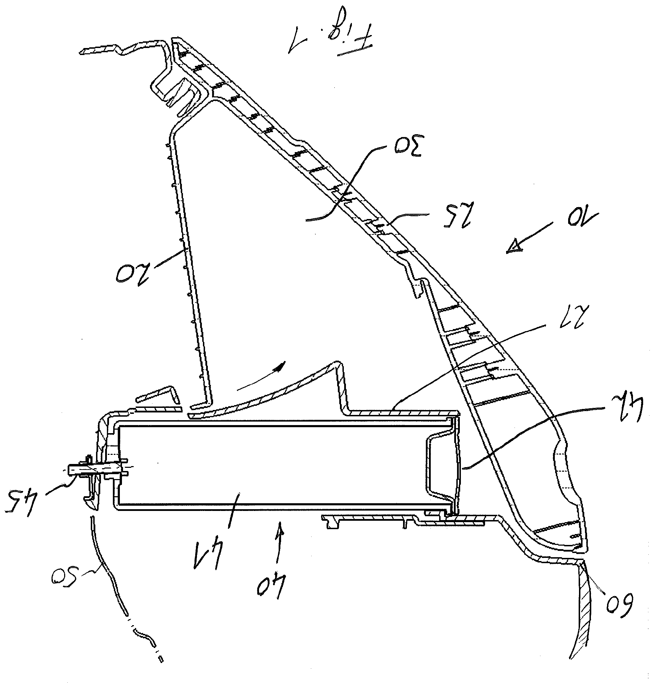

Figur 1 zeigt in einer Schnittdarstellung in Aufbewahrungsrichtung 10 in Gestalt eines Handschuhfaches. Das Handschuhfach ist Teil einer Innenausstattung eines Kraftfahrzeuges und ist unterhalb eines Instrumentenpanels 60 oder einer Instrumententafel 60 angeordnet. Die Aufbewahrungseinrichtung 10 sieht in der dargestellten Ausführungsform ein Gehäuse 20 vor, das zusammen mit einer Verschlusseinrichtung 25, die die insassenseitige Front bildet. Hinter der Verschlusseinrichtung 25 befindet sich ein Aufnahmeraum 30, der nur bei geöffneter Verschlusseinrichtung 25 zugänglich ist. In dem dargestellten Ausführungsbeispiel ist die Verschlusseinrichtung 25 geschlossen, so dass der Aufnahmeraum 30, der durch den Raum gebildet wird, der hinter der Verschlusseinrichtung 25 liegt und nicht zwangsweise durch die einstückig an der Verschlusseinrichtung 25 angeformte Gehäusewand abgebildet werden muss. Das Gehäuse 20 kann ebenso starr mit dem Instrumentenpanel 60 verbunden sein, die Verschlusseinrichtung 25 ist dann über ein Scharnier klappenartig zu öffnen, der Aufnahmeraum 30 und die darin aufgenommenen Gegenstände verändern ihre Position nicht. Neben einer verschwenkbaren Lagerung der Verschlusseinrichtung 25 kann diese auch verschiebbar ausgebildet sein, darüber hinaus kann eine Verschwenkung um eine Achse erfolgen die abweichend von der darstellten, horizontal verlaufenden Achse vertikal oder geneigt orientiert ist.

Hinter der Verschlusseinrichtung 25 ist ein verschließbarer Behälter 40 innerhalb der Aufbewahrungseinrichtung 10 angeordnet, wobei der Behälter 40 in einem separaten Teil, Bereich oder Fach 21 der Aufbewahrungseinrichtung 10 angeordnet ist. Das Fach 21 befindet sich hinter der Verschlusseinrichtung 25 und dient zur Aufnahme des Behälters 40, der ein formstabiles Gehäuse 43 und eine Klappe 42 aufweist, über die ein Innenraum 41 des Behälters 40 verschließbar oder zugänglich machbar ist.

Innerhalb des Innenraumes 41, der ebenso wie der Aufnahmeraum 30 auf der Innenseite beflockt oder gepolstert sein kann, ist eine Befestigungseinrichtung 45 angeordnet, die im dargestellten Ausführungsbeispiel als Schraube ausgebildet ist, und über die der Behälter 40 mit einem Strukturbauteil 50 verbunden ist. Die Befestigungseinrichtung 45 ist nur über den Innenraum 41 des Behälters zugänglich, also nur bei geöffneter Klappe 42, so dass nach der Montage des Behälters 40 an dem Strukturbauteil 50, das entweder als Querträger oder als eine Halterung 50, die mit der Karosserie des Fahrzeuges fest verbunden ist, ausgebildet sein kann, eine Demontage bei geschlossener Klappe 42 nicht oder nur unter Zerstörung des Instrumentenpaneels 60 möglich ist. Das Fach 21 umschließt den Behälter 40 überwiegend, so dass der Behälter 40 in das Fach 21 eingeschoben wird und mit seiner Rückseite an der Rückseite des Faches 21 anstößt. Lediglich die Klappe 42 ist dann vom Fahrzeuginnenraum, in dem der Fahrzeuginsasse sitzt, zugänglich, wenn die Verschlusseinrichtung 25 geöffnet wird.

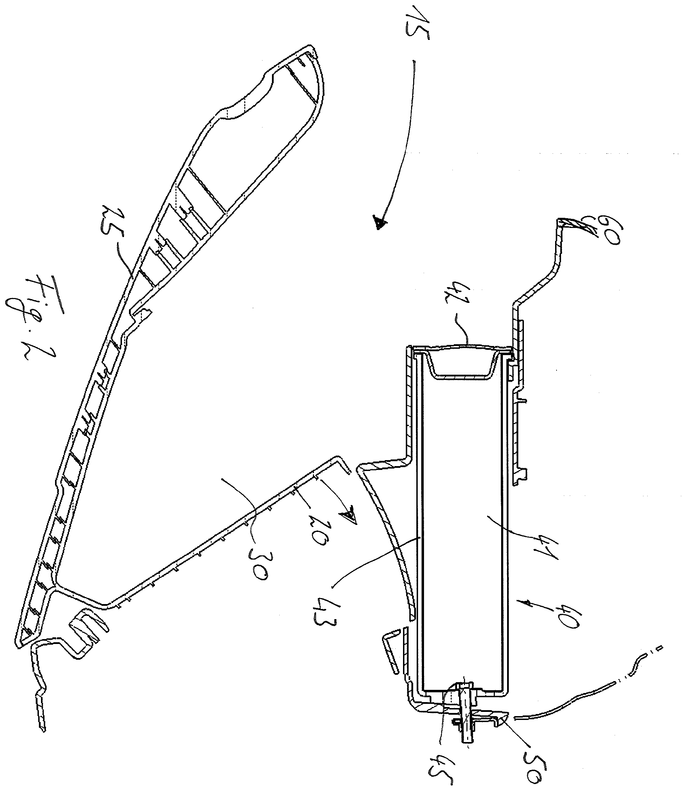

Die geöffnete Stellung der Verschlusseinrichtung 25 ist in der Figur 2 dargestellt. Das Gehäuse 20 wird zusammen mit der Verschlusseinrichtung 25 nach vorne geklappt, so dass ein Zugang 15 zu dem Aufnahmeraum 30 für Gegenstände gegeben ist. Zusammen mit dem Zugang 15 zu dem Aufnahmeraum 30 wird auch der Zugang zu der Klappe 42 des Behälters 40 ermöglicht. Das Gehäuse 43, das den Innenraum 41 auf fünf Seiten umgibt, ist von dem Aufnahmeraum 30 aus nicht zugänglich, da das Fach 21 das Gehäuse 43 abdeckt. Statt einer Schraubverbindung kann die Befestigungseinrichtung 45 alternativ als unlösbare Rastverbindung, Nietverbindung oder eine andere formschlüssige, stabile und gegen unbefugtes Entfernen aus dem Fach 21 ausgebildete Befestigungseinrichtung ausgebildet sein. Grundsätzlich ist auch möglich, mehrere Befestigungseinrichtungen 45 vorzusehen, über die der Behälter 40 an dem Strukturbauteil 50 festgelegt ist. Alle oder nur ein Teil der Befestigungseinrichtungen 45 können dann von dem Innenraum 41 des Behälters aus zugänglich sein.

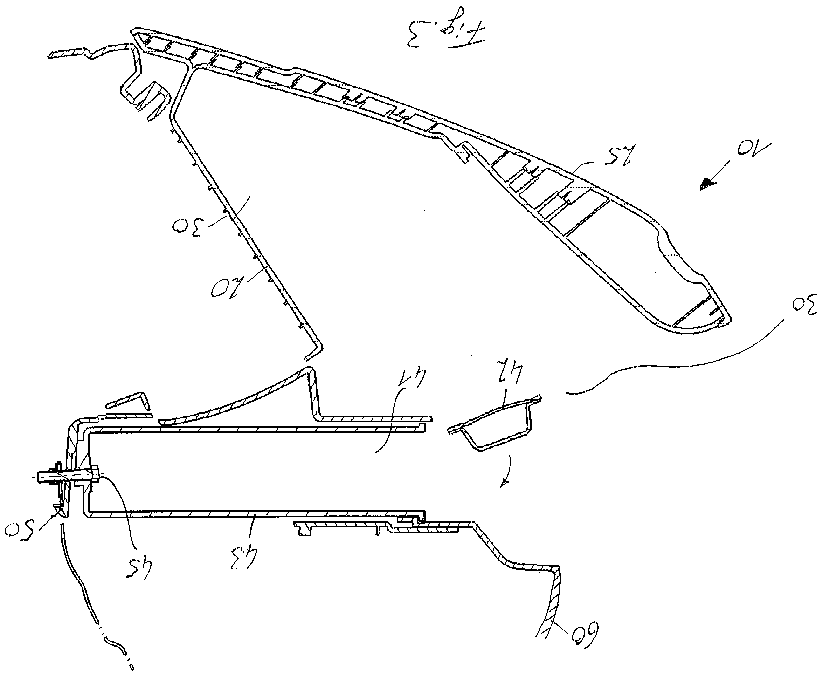

In der Figur 3 ist die Aufbewahrungseinrichtung 10 in einer weiteren schematischen Seitenansicht gezeigt, hier mit einer geöffneten Klappe 42. Der Figur 3 ist zu entnehmen, dass die Klappe 42 nur bei geöffneter Verschlusseinrichtung 25 geöffnet werden kann, die Verschlusseinrichtung 25 stellt somit eine zweite Sperre gegen einen Zugang zu dem Innenraum 41 des Behälters 40 dar.

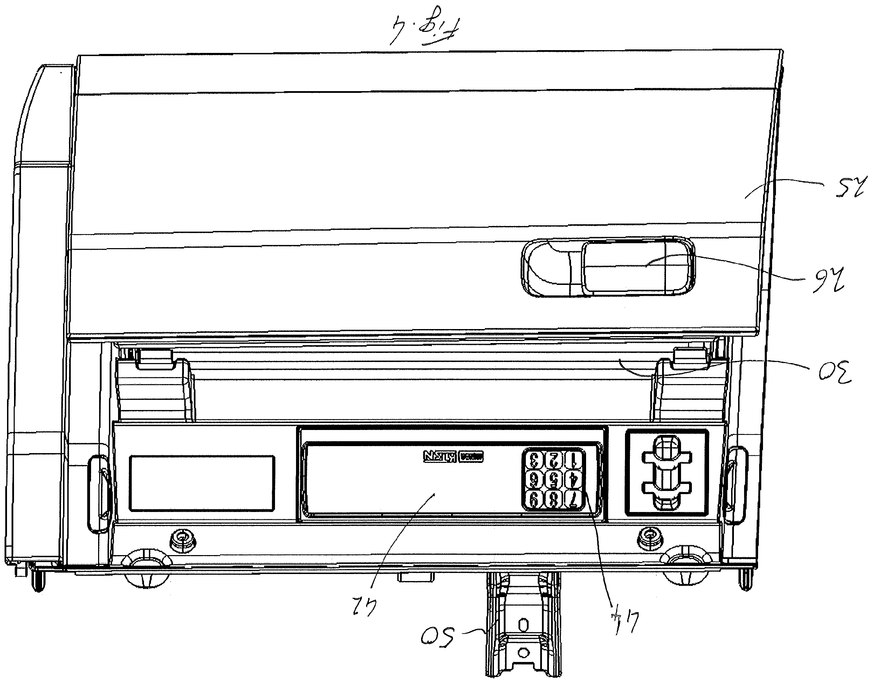

Figur 4 zeigt eine vollständig geöffnete Verschlusseinrichtung 25 in Frontalansicht; durch die geöffnete Verschlusseinrichtung 25 wird ein Zugang zu dem dahinter liegenden Aufnahmeraum 30 ermöglicht. Hinter der Verschlusseinrichtung 25, die durch ein Schloss 26 oder eine Schnappeinrichtung auch verschließbar an dem Instrumentenpanel 60 gelagert sein kann, ist an der Oberkante der Aufnahmeeinrichtung 10 die Klappe 42 mit einem Eingabefeld 44 sichtbar. Erst nach dem Öffnen der Verschlusseinrichtung 25 ist das Eingabefeld 44 zugänglich. Ebenso kann erst nach dem Öffnen der Verschlusseinrichtung 25 die Klappe 42 überhaupt geöffnet werden. Im Hintergrund ist die Halterung 50 als Strukturbauteil des Fahrzeuges zu erkennen, an dem der Behälter 40, von dem nur die Klappe 42 zu sehen ist, befestigt ist. Im geschlossenen Zustand der Verschlusseinrichtung 25 ist der Zugang zu dem Behälter 40 vollständig gesperrt, grundsätzlich ist es auch möglich, dass der Zugang zu dem Behälter 42 durch die geschlossene Verschlusseinrichtung 25 nur teilweise versperrt ist, beispielsweise nur die Hälfte der Klappe 42 ohne Eingabefeld 44. Ein Öffnen der Klappe 42 soll jedoch auch bei einer geschlossenen Verschlusseinrichtung 25 weiterhin verhindert werden.

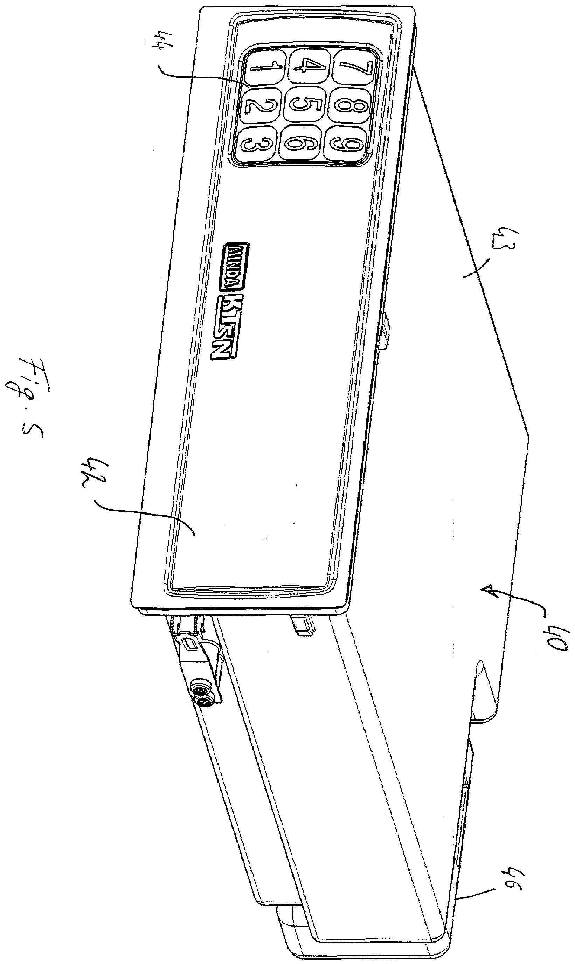

Figur 5 zeigt eine Einzeldarstellung des Behälters 40 mit dem Eingabefeld 44, das auf der Frontseite der Klappe 42 angeordnet ist. An dem Gehäuse 43, das formstabil und mechanisch belastbar ist, ist an der Rückseite ein elektrischer Anschluss 46 angeordnet, über den eine elektrische Verbindung zu dem Stromnetz des Fahrzeuges hergestellt werden kann. Über den elektrischen Anschluss 46 können Sensoren und beispielsweise ein elektrischer Aktuator zum Verschließen und Freigeben der Klappe 42 nach der Eingabe eines Sicherheitscodes aktiviert beziehungsweise deaktiviert werden.

## Patentansprüche

1. Aufbewahrungseinrichtung (10) in einem Fahrzeug mit einem Gehäuse (20), das einen Aufnahmeraum (30) ausbildet, und einer Verschlusseinrichtung (25), mit der der Zugang (15) zu dem Aufnahmeraum (30) versperrbar ist, wobei die Verschlusseinrichtung (25) an der Aufbewahrungseinrichtung (10) verlagerbar gelagert ist, wobei ein Behälter (40) in der Aufbewahrungseinrichtung (10) angeordnet ist, der eine Befestigungseinrichtung (45) zur Festlegung des Behälters (40) an das Fahrzeug aufweist, wobei der Zugang zu dem Behälter (40) durch die Verschlusseinrichtung (25) zumindest teilweise verschließbar ist, **dadurch gekennzeichnet, dass** der verschließbare Behälter (40) in einem Handschuhfach angeordnet und an einem Querträger als Strukturbauteil (50) festgelegt ist.

2. Aufbewahrungseinrichtung nach Anspruch 1, **dadurch gekennzeichnet, dass** die Befestigungseinrichtung (45) nur über den Innenraum (41) des Behälters (40) zugänglich ist.

3. Aufbewahrungseinrichtung nach Anspruch 1 oder 2, **dadurch gekennzeichnet, dass** der Behälter (40) zumindest einen elektrischen Anschluss (46) aufweist.

4. Aufbewahrungseinrichtung nach einem der voranstehenden Ansprüche, **dadurch gekennzeichnet, dass** der Behälter (40) über eine verschließbare Klappe (42) oder einen verschließbaren Schieber verschließbar oder zugänglich ist.

5. Aufbewahrungseinrichtung nach Anspruch 4, **dadurch gekennzeichnet, dass** die Klappe (42) oder der Schieber mit einem elektrischen Schloss gesichert ist.

6. Aufbewahrungseinrichtung nach Anspruch 4 oder 5, **dadurch gekennzeichnet, dass** auf der Klappe (42) oder auf dem Schieber ein Eingabefeld (44) angeordnet ist.

7. Aufbewahrungseinrichtung nach einem der voranstehenden Ansprüche, **dadurch gekennzeichnet, dass** die Verschlusseinrichtung (25) so angeordnet ist, dass der Behälter (40) nur bei geöffneter Verschlusseinrichtung (25) geöffnet werden kann.

8. Aufbewahrungseinrichtung nach einem der voranstehenden Ansprüche, **dadurch gekennzeichnet, dass** die Verschlusseinrichtung (25) ein Schloss (26) und/oder einen elektrischen Aktuator aufweist.

9. Aufbewahrungseinrichtung nach einem der voranstehenden Ansprüche, **dadurch gekennzeichnet, dass** der Innenraum (30; 41) des Behälters (40) und/oder des Gehäuses (20) beflockt ist.

10. Aufbewahrungseinrichtung nach einem der voranstehenden Ansprüche, **dadurch gekennzeichnet, dass** der Behälter (40) in dem Aufnahmeraum (30) und/oder zumindest teilweise hinter der Verschlusseinrichtung (25) angeordnet ist.

11. Aufbewahrungseinrichtung nach einem der voranstehenden Ansprüche, **dadurch gekennzeichnet, dass** der Behälter (40) in einem Fach (21) hinter der Verschlusseinrichtung (25) angeordnet ist.

## Claims

1. Storage device (10) in a vehicle comprising a housing (20), which forms a receiving space (30), and a locking device (25), by means of which access (15) to the receiving space (30) can be blocked, the locking device (25) being displaceably mounted on the storage device (10), a container (40) being arranged in the storage device (10), and having a fixing device (45) for fastening the container (40) to the vehicle, access to the container (40) being lockable at least in part by the locking device (25), **characterized in that** the lockable container (40) is arranged in a glove compartment and is fastened to a cross-beam as a structural component (50).

2. Storage device according to claim 1, **characterized in that** the fixing device (45) is only accessible via the interior (41) of the container (40).

3. Storage device according to either claim 1 or claim 2, **characterized in that** the container (40) has at least one electrical connector (46).

4. Storage device according to any of the preceding claims, **characterized in that** the container (40) is lockable or accessible by way of a lockable flap (42) or a lockable slide.

5. Storage device according to claim 4, **characterized in that** the flap (42) or the slide is secured using an electrical lock.

6. Storage device according to either claim 4 or claim 5, **characterized in that** an input field (44) is arranged on the flap (42) or on the slide.

7. Storage device according to any of the preceding claims, **characterized in that** the locking device (25) is arranged in such a way that the container (40) can be opened only when the locking device (25) is open.

8. Storage device according to any of the preceding claims, **characterized in that** the locking device (25) has a lock (26) and/or an electrical actuator.

9. Storage device according to any of the preceding claims, **characterized in that** the interior (30; 41) of the container (40) and/or of the housing (20) is flocked.

10. Storage device according to any of the preceding claims, **characterized in that** the container (40) is arranged in the receiving space (30) and/or at least in part behind the locking device (25).

11. Storage device according to any of the preceding claims, **characterized in that** the container (40) is arranged in a compartment (21) behind the locking device (25).

## Revendications

1. Dispositif de rangement (10) dans un véhicule, comportant un boîtier (20) qui constitue un espace de réception (30), et un moyen d'obturation (25) permettant d'obturer l'accès (15) à l'espace de réception (30), le moyen d'obturation (25) étant monté mobile sur le dispositif de rangement (10), un réceptacle (40) étant agencé dans le dispositif de rangement (10), qui comprend un moyen de fixation (45) pour immobiliser le réceptacle (40) sur le véhicule, l'accès au réceptacle (40) pouvant être obturé au moins partiellement par le moyen d'obturation (25),
**caractérisé en ce que**
le réceptacle (40) susceptible d'être obturé est agencé dans une boîte à gants et immobilisé sur une traverse faisant office de composant de structure (50).

2. Dispositif de rangement selon la revendication 1,
**caractérisé en ce que**
le moyen de fixation (45) n'est accessible que par l'intérieur (41) du réceptacle (40).

3. Dispositif de rangement selon la revendication 1 ou 2,
**caractérisé en ce que**
le réceptacle (40) présente au moins une borne électrique (46).

4. Dispositif de rangement selon l'une des revendications précédentes,
**caractérisé en ce que**
le réceptacle (40) est susceptible d'être obturé ou accessible par un volet refermable (42) ou par un tiroir refermable.

5. Dispositif de rangement selon la revendication 4,
**caractérisé en ce que**
le volet (42) ou le tiroir est sécurisé par une serrure électrique.

6. Dispositif de rangement selon la revendication 4 ou 5,
**caractérisé en ce que**
un champ d'entrée (44) est agencé sur le volet (42) ou sur le tiroir.

7. Dispositif de rangement selon l'une des revendications précédentes,
**caractérisé en ce que**
le moyen d'obturation (25) est agencé de telle sorte que le réceptacle (40) ne peut être ouvert que lorsque le moyen d'obturation (25) est ouvert.

8. Dispositif de rangement selon l'une des revendications précédentes,
**caractérisé en ce que**
le moyen d'obturation (25) comprend une serrure (26) et/ou un actionneur électrique.

9. Dispositif de rangement selon l'une des revendications précédentes,
**caractérisé en ce que**
l'intérieur (30 ; 41) du réceptacle (40) et/ou du boîtier (20) est pourvu d'un flocage.

10. Dispositif de rangement selon l'une des revendications précédentes,
**caractérisé en ce que**
le réceptacle (40) est agencé dans l'espace de réception (30) et/ou au moins partiellement derrière le moyen d'obturation (25).

11. Dispositif de rangement selon l'une des revendications précédentes,
**caractérisé en ce que**
le réceptacle (40) est agencé dans un casier (21) derrière le moyen d'obturation (25).
